# EUROPEAN PATENT APPLICATION

(11) **EP 4 425 172 A1**
(43) Date of publication of application: **04.09.2024**
(21) Application number: 22887011.9
(22) Date of filing: 25.10.2022
(51) Int. Cl.: G01N 29/11, G01N 29/48

(54) **INSPECTION METHOD AND INSPECTING DEVICE**

(30) Priority: 29.10.2021 JP 2021178076
(71) Applicant: Yamaha Fine Technologies Co., Ltd., Hamamatsu-shi, Shizuoka 435-8568 (JP)
(72) Inventor: NARA, Akihiro, Hamamatsu-shi, Shizuoka 435-8568 (JP); KATAYAMA Hiroki, Hamamatsu-shi, Shizuoka 435-8568 (JP)
(74) Representative: Hoffmann Eitle
(86) International application number: PCT/JP2022/039729
(87) International publication number: WO 2023/074685

(57) **Abstract**

A plurality of signal strengths that correspond respectively to a plurality of positions are acquired, the plurality of positions being included in an inspection region of an inspection target and being arranged along a first and second direction, each of the plurality of signal strengths indicating a signal strength corresponding to reception of ultrasonic waves emitted into the inspection region. Two-dimensional distribution data representing a relationship between the plurality of positions and the plurality of signal strengths are generated. By using the two-dimensional distribution data, a number of positions, among the plurality of positions, that are arranged along the second direction and that are associated with the signal strength indicating a strength included in a first range are counted. A quality of the inspection target is determined based on a comparison result between a result of the count and a first reference value.

## Description

### TECHNICAL FIELD

The present disclosure relates to an inspection method and an inspecting device.

Priority is claimed on Japanese Patent Application No. 2021-178076, filed October 29, 2021, the disclosure of which is incorporated herein in its entirety.

### BACKGROUND ART

In pouch-type packaging containers, a stored object is stored in a sealed state. Such packaging containers are formed into a bag shape by joining the peripheral edge sections of sheet members or film members by welding, adhesion, or the like. An opening portion of the packaging container is closed after the stored object is stored inside the packaging container. As an inspecting device that inspects the joined state of such packaging containers, for example, as described in Patent Document 1, there is proposed a device that performs an inspection by arranging a packaging container, being the inspection target, between an ultrasonic transmission unit and an ultrasonic reception unit, transmitting ultrasonic waves from the ultrasonic transmission unit, and then analyzing the ultrasonic waves received by the ultrasonic reception unit.

### Prior Art Documents

### Patent Documents

Patent Document 1: Japanese Unexamined Patent Application, First Publication No. 2020-27012

### SUMMARY OF THE INVENTION

### Problems to be Solved by the Invention

In the inspecting device described in Patent Document 1, a seal section is sometimes inspected along a length direction (a direction along the outer periphery) by relatively moving the packaging container. Such an inspecting device determines whether or not the quality of the joined state is satisfactory based on an inspection result at each position along the length direction of the packaging container. As a result, when a detection result is obtained that indicates a defect in any of the locations in the length direction of the packaging container, it is detected that a location exists that has not been correctly joined, and it is determined in the inspection result of the packaging container that a defect exists.

However, defects in the joined state are not always along the length direction of the packaging container, and include defects in various forms such as a state where the welding at the joined location is insufficient over the whole joined surface, a state where the welding at the joined location is excessive, and a state where air bubbles have entered the joined location. Furthermore, when a defect is detected at a joined location, it is desirable that the cause of the defect is easily investigated.

Furthermore, in Patent Document 1, when the joined state is inspected in the length direction, the joined location also has a certain length in the width direction (a direction that is orthogonal to the length direction). Therefore, even when there is a defect in the joined state at one of the positions in the length direction, if the joining has been correctly performed in each of the positions in the width direction, the joined portion has not separated and can be treated as a product having satisfactory quality in some cases. However, with the method of Patent Document 1, it can sometimes be difficult to accurately perform a pass/fail determination of the quality.

In view of the problems described above, one example object of the present disclosure is to provide an inspection method and an inspecting device that are capable of determining whether or not the quality is satisfactory in consideration of a variety of joined states.

### Means for Solving the Problem

A detection method according to an one aspect of the present disclosure includes: acquiring a plurality of signal strengths that correspond respectively to a plurality of positions, the plurality of positions being included in an inspection region of an inspection target and being arranged along a first and second direction, each of the plurality of signal strengths indicating a signal strength corresponding to reception of ultrasonic waves emitted into the inspection region; generating two-dimensional distribution data representing a relationship between the plurality of positions and the plurality of signal strengths; counting, by using the two-dimensional distribution data, a number of positions, among the plurality of positions, that are arranged along the second direction and that are associated with the signal strength indicating a strength included in a first range; and determining a quality of the inspection target based on a comparison result between a result of the count and a first reference value.

A detection method according to one aspect of the present disclosure includes: acquiring a plurality of signal strengths that correspond respectively to a plurality of positions, the plurality of positions being included in an inspection region of an inspection target and being arranged along a first and second direction, each of the plurality of signal strengths indicating a signal strength corresponding to reception of ultrasonic waves emitted into the inspection region; generating two-dimensional distribution data representing a relationship between the plurality of positions and the plurality of signal strengths; counting, by using the two-dimensional distribution data, a number of positions, among the plurality of positions, that are included in a determination target area and that are associated with the signal strength indicating a strength included in a first range; and determining a quality of the inspection target based on a comparison result between a result of the count and a second reference value.

A detection method according to an exemplary aspect of the present disclosure includes: acquiring a plurality of signal strengths that correspond respectively to a plurality of positions, the plurality of positions being included in an inspection region of an inspection target and being arranged along a first and second direction, each of the plurality of signal strengths indicating a signal strength corresponding to reception of ultrasonic waves emitted into the inspection region; generating two-dimensional distribution data representing a relationship between the plurality of positions and the plurality of signal strengths; and determining a quality of the inspection target based on the two-dimensional distribution data and a trained model, the trained model being generated by learning reference two-dimensional distribution data generated using a reference target that serves as a reference.

### Effect of Invention

According to the present disclosure, it is possible to perform a pass/fail determination with consideration of various joined states by performing a seal width check, which performs a pass/fail determination according to a width direction length of a region in which the signal strength in a two-dimensional distribution data belongs to a reference range, an area check that performs a pass/fail determination according to an area of a specific color in a determination target area, and a correlation check that performs a pass/fail determination using a correlation with reference data. Furthermore, according to the present disclosure, when a defect is detected, it becomes easier to examine the cause of the defect. In addition, when a defect is detected at a joined location, it becomes easier to deal with the defect.

### BRIEF DESCRIPTION OF THE DRAWINGS

FIG. 1 is a block diagram showing an example of a configuration of an ultrasonic inspection system according to an embodiment of the present disclosure.
FIG. 2 is an explanatory diagram showing an example of a display screen of a display device in an ultrasonic inspection system according to an embodiment of the present disclosure.
FIG. 3 is an explanatory diagram of a packaging container, which is an inspection target.
FIG. 4 is a flowchart showing the processing performed in a seal width check in an ultrasonic inspection system according to an embodiment of the present disclosure.
FIG. 5 is a diagram showing the relationship between the signal strength and a set color signal.
FIG. 6A is an explanatory diagram of a seal width check.
FIG. 6B is an explanatory diagram of a seal width check.
FIG. 7 is a flowchart showing the processing in an area check according to the present embodiment.
FIG. 8A is an explanatory diagram of an area check.
FIG. 8B is an explanatory diagram of an area check.
FIG. 9A is an explanatory diagram showing the setting of a determination target area.
FIG. 9B is an explanatory diagram showing the setting of a determination target area.
FIG. 10 is a flowchart showing the processing in a correlation check according to the present embodiment.
FIG. 11A is an explanatory diagram of a correlation check.
FIG. 11B is an explanatory diagram of a correlation check.
FIG. 12 is a flowchart showing the processing in a case where a correlation between histograms is calculated in a correlation check according to an embodiment of the present disclosure.
FIG. 13A is an explanatory diagram of a pass/fail determination performed using a correlation between histograms.
FIG. 13B is an explanatory diagram of a pass/fail determination performed using a correlation between histograms.
FIG. 13C is an explanatory diagram of a pass/fail determination performed using a correlation between histograms.
FIG. 14 is a flowchart showing the pass/fail determination processing performed in an ultrasonic inspection system according to an embodiment of the present disclosure.

### DETAILED DESCRIPTION OF THE EMBODIMENTS

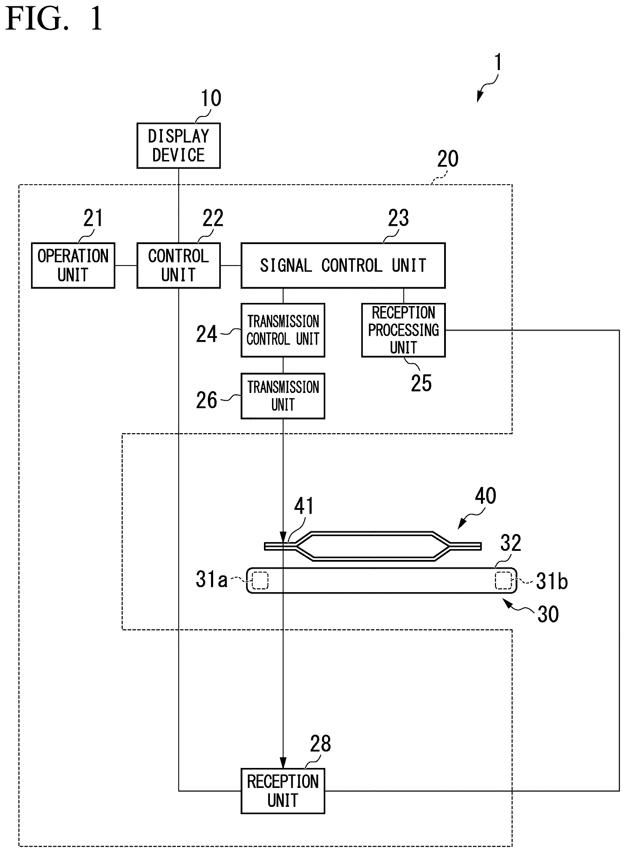

Hereinafter, embodiments of the present disclosure will be described with reference to the drawings. FIG. 1 is a block diagram showing an example of a configuration of an ultrasonic inspection system 1 according to an embodiment. The ultrasonic inspection system 1 inspects a packaging container 40, which is an inspection target, using ultrasonic waves. In the example shown in FIG. 1, the ultrasonic inspection system 1 includes a display device 10, an ultrasonic inspecting device 20, and a transport device 30.

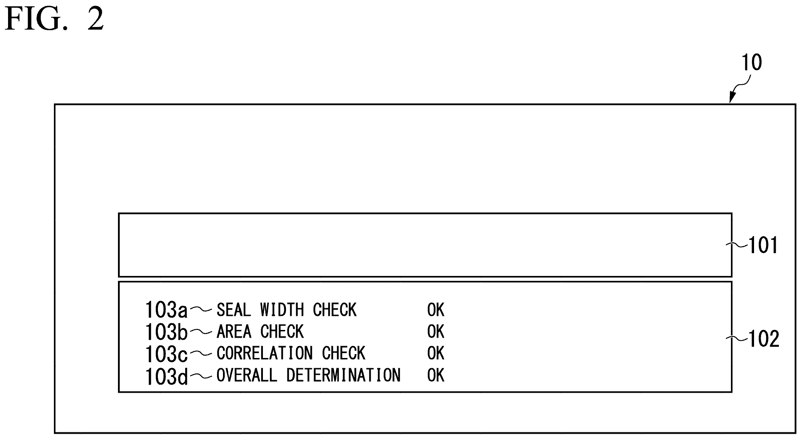

The display device 10 displays various information related to an ultrasonic inspection that is output from a control unit 22 of the ultrasonic inspecting device 20. FIG. 2 is an example of a display screen of the display device 10 in the ultrasonic inspection system 1 according to the present embodiment. As shown in FIG. 2, the display screen of the display device 10 includes an ultrasonic image display area 101 and an inspection result display area 102. The ultrasonic image display area 101 displays a two-dimensional image (two-dimensional distribution data) based on a received result that has been received by a reception unit 28. The inspection result display area 102 displays a seal width check determination result 103a, an area check determination result 103b, a correlation check determination result 103c, and an overall determination result 103d.

In FIG. 1, the transport device 30 transports the packaging container 40. The transport device 30 is, for example, a conveyor belt. The packaging container 40, which is the inspection target, is placed on a belt 32 of the transport device 30. The transport device 30 drives the belt 32 by rotating rollers 31 (rollers 31a and 31b) provided therein, and transports the packaging container 40, which is the inspection target, to a predetermined inspection position between a transmission unit 26 and the reception unit 28. The rotation of the rollers 31 is controlled, for example, by a drive control unit of the ultrasonic inspecting device 20.

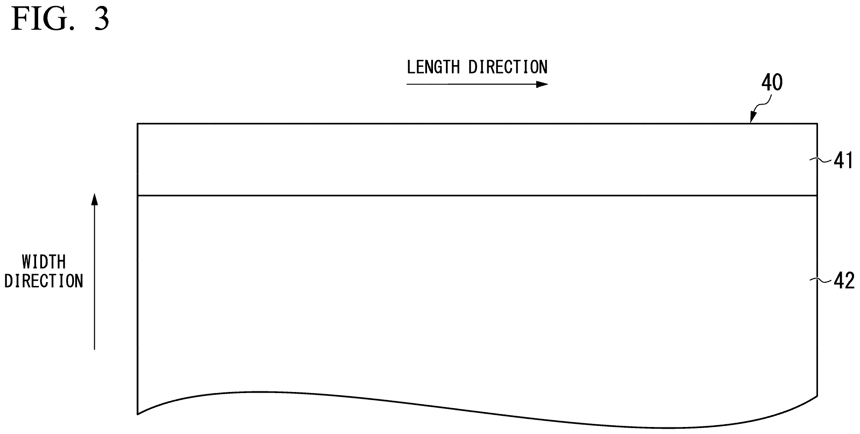

The packaging container 40 is a target object that is inspected by the ultrasonic inspecting device 20. The packaging container 40 is, for example, a packaging container formed by joining a peripheral edge portion 41 of sheet members, and is used as a pouch-type packaging container for retort foods, drinking water, and the like. FIG. 3 is an explanatory diagram of the packaging container 40, which is an inspection target. A portion of the packaging container 40 is illustrated in FIG. 3. As shown in FIG. 3, the packaging container 40 has a peripheral edge portion 41 and a storage region 42. The storage region 42 is a bag-shaped region that is capable of enclosing a stored object. The peripheral edge portion 41 is a region on the peripheral edge of the packaging container 40, and is a region that is joined together. The location of the packaging container 40 that becomes the inspection region is, for example, a joined location of the peripheral edge portion 41 at which the two sheet members constituting the packaging container are to be joined together.

In FIG. 1, the ultrasonic inspecting device 20 is a computer that transmits ultrasonic waves, and inspects the packaging container 40 based on the ultrasonic waves transmitted through the packaging container 40. The ultrasonic inspecting device 20 includes, for example, an operation unit 21, a control unit 22, a signal control unit 23, a transmission control unit 24, a reception processing unit 25, the transmission unit 26, and the reception unit 28.

The ultrasonic inspecting device 20 is a computer that includes a processor such as a CPU (Central Processing Unit) and a program memory that stores programs executed by the processor. The functional units constituting the ultrasonic inspecting device 20 (the operation unit 21, the control unit 22, the signal control unit 23, the transmission control unit 24, the reception processing unit 25, the transmission unit 26, and the reception unit 28) are realized, for example, by a processor such as a CPU (Central Processing Unit) executing a program stored in the program memory. Some or all of these functional units may be realized by hardware such as an LSI (Large Scale Integration), an ASIC (Application Specific Integrated Circuit), or an FPGA (Field-Programmable Gate Array).

The operation unit 21 is configured by a keyboard, a mouse, or the like, and is used to input and set various information related to an ultrasonic inspection. The operation unit 21 outputs the various information that has been input to the control unit 22.

The control unit 22 controls the ultrasonic inspecting device 20 in an integrated manner. The control unit 22, for example, transmits the various information that has been input from the operation unit 21 and information from the signal control unit 23 to the display device 10.

The signal control unit 23 generates signals for controlling the ultrasonic waves transmitted from the transmission unit 26. The ultrasonic waves to be transmitted are, for example, burst signals. The signal control unit 23, for example, generates burst signals corresponding to the transmission timing and strength of the ultrasonic waves to be transmitted. The signal control unit 23 outputs the generated signals to the transmission control unit 24.

Furthermore, the signal control unit 23 acquires the signals received by the reception unit 28 via the reception processing unit 25. The signal control unit 23 generates two-dimensional distribution data from the acquired signals, and generates an image based on the two-dimensional distribution data. Here, the two-dimensional distribution data is image data that represents the relationship between a plurality of positions arranged in a length direction (a first direction) and a width direction (a second direction, being a direction that is orthogonal to the length direction) of an inspection region, and the signal strengths at each of the positions.

Moreover, the signal control unit 23 performs analysis using the acquired two-dimensional distribution data, and outputs an analysis result to the control unit 22. In the present embodiment, the signal control unit 23 can perform a seal width check, an area check, a correlation check, and an overall quality determination using these checks.

In addition, the signal control unit 23 determines, based on the analyzed result, an image of the inspection region, and the presence or absence of a defect in the joined location, being the inspection region, and outputs the determined result to the control unit 22. The control unit 22 displays the result of the determination that has been acquired from the signal control unit 23 on the display device 10.

The transmission control unit 24 generates burst waves of a predetermined frequency in response to the burst signals from the signal control unit 23, and outputs the generated burst waves to the transmission unit 26. The transmission unit 26 converts the burst waves into ultrasonic vibrations, and outputs them as ultrasonic waves.

The reception unit 28 includes a plurality of ultrasonic sensors that are one-dimensionally or two-dimensionally arranged (a plurality of ultrasonic sensors arranged in a single row, or a plurality of ultrasonic sensors arranged in a vertical direction and a horizontal direction), and receives the ultrasonic waves transmitted from the transmission unit 26. The ultrasonic waves from the transmission unit 26 reach the reception unit 28 via the peripheral edge portion 41 of the packaging container 40. The ultrasonic sensors arranged in the reception unit 28 convert the received ultrasonic waves into a detection signal, which is an analog electrical signal. Then, the reception unit 28 transmits the detection signal of each ultrasonic sensor to the reception processing unit 25.

When the ultrasonic sensors in the reception unit 28 are arranged one-dimensionally, they are arranged along the width direction of the peripheral edge portion 41. In this case, the packaging container 40 is relatively moved in the length direction with respect to the reception unit 28, while the reception unit 28 receives the ultrasonic waves transmitted from the transmission unit 26. As a result, an inspection is performed over the entire peripheral edge portion 41. Furthermore, when the ultrasonic sensors in the reception unit 28 are two-dimensionally arranged, for example, in the reception unit 28, the plurality of ultrasonic sensors are arranged in a two-dimensional direction such that the area is approximately equivalent to the area of the region of the peripheral edge portion 41. In this case, the packaging container 40 is transported by the transport device 30 to a position in which the region of the peripheral edge portion 41 and the region of the reception unit 28 are overlapped, and then transport of the packaging container 40 is stopped. Then, ultrasonic waves are transmitted from the transmission unit 26, and are received by the reception unit 28. It is possible to perform an inspection over the entire region of the peripheral edge portion 41, regardless of whether the ultrasonic sensors in the reception unit 28 are one-dimensionally arranged, or are two-dimensionally arranged.

The reception processing unit 25 acquires the analog detection signals received by the reception unit 28, performs signal amplification and equalization processing and the like, converts the analog detection signals to digital detection signals by performing AD (analog-digital) conversion, and transmits them to the signal control unit 23.

The signal control unit 23 generates two-dimensional distribution data from the detection signals that have been output from the reception processing unit 25, and creates an image based on the two-dimensional distribution data. Here, the signal control unit 23 uses the values corresponding to the detection signal of one ultrasonic sensor as a pixel value, and generates the two-dimensional distribution data by arranging, with respect to the two-dimensional region of the two-dimensional distribution data, pixels having the pixel values according to the positions at which the detection signals were received. When the two-dimensional distribution data is generated using detection signals from the reception unit 28, pixel interpolation processing may also be performed.

Next, a pass/fail inspection of the quality of a joined location in the present embodiment will be described in detail. In the pass/fail inspection of the quality of a joined location in the present embodiment, a seal width check, an area check, and a correlation check are performed. Hereunder, each of the pass/fail determinations will be described.

First, a seal width check will be described. A seal width check includes counting, from an image of the two-dimensional distribution data generated using the detection signals from the reception unit 28, the number of pixels (points) in the width direction in which the signal strength of the detection signal belongs to a reference range, and determining, from the count value, whether or not the quality of the joined location of the packaging container 40 is satisfactory. Here, as shown in FIG. 3, the width direction is the direction from the storage region 42 toward the peripheral edge portion 41 of the packaging container 40. Furthermore, the length direction is the direction along the outer periphery of the packaging container 40. The width direction and the length direction are orthogonal to each other. Moreover, the number of points (point count) is an index representing the length in the length direction or the length in the width direction in FIG. 3, and for example, the number of pixels can be used. That is to say, the result of counting the number of pixels can be used as the point count. As mentioned above, the two-dimensional distribution data of the peripheral edge portion 41, which is the inspection target, is generated using the detection signals from the reception processing unit 25, and an image such as that shown in the ultrasonic image display area 101 in FIG. 2 is generated based on the two-dimensional distribution data. Therefore, the length in the length direction in FIG. 3 corresponds to the number of pixels in the horizontal direction of the image such as that shown in the ultrasonic image display area 101, and the length in the width direction corresponds to the number of pixels in the vertical direction. In addition, when the detection signals of the reception unit 28 have been interpolated, the point count and the pixel count become values that correspond to each other.

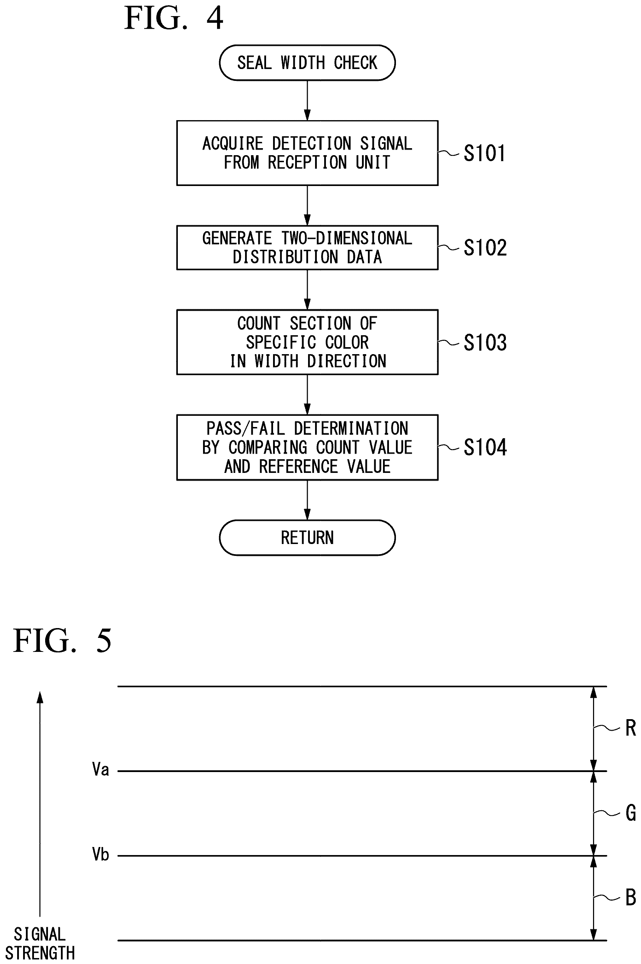

FIG. 4 is a flowchart showing the processing performed in a seal width check in the ultrasonic inspection system 1 according to an embodiment.

(Step S101) The signal control unit 23 causes the transmission unit 26 to transmit ultrasonic waves into the inspection region of the packaging container 40, and acquires detection signals from the reception unit 28. Here, the signal control unit 23 reads out the detection signals of the ultrasonic sensors arranged one-dimensionally or two-dimensionally from the reception unit 28 by scanning line-by-line.

(Step S102) The signal control unit 23 sets a color according to the signal strength of the detection signal from each sensor of the reception unit 28, and generates two-dimensional distribution data. FIG. 5 is a diagram showing the relationship between the signal strength and a set color signal. In the present example, as shown in FIG. 5, an RGB image is generated from the two-dimensional distribution data by setting the corresponding location to red (R) when the signal strength is Va or higher, setting the corresponding location to green (G) when the signal strength is less than Va and Vb or higher, and setting the corresponding location to blue (B) when the signal strength is less than Vb. Here, each pixel of the two-dimensional distribution data is displayed in a color corresponding to the signal strength, which makes it easier to visually recognize the inspection result.

(Step S103) The signal control unit 23 counts, from the image of the generated two-dimensional distribution data, the number of points that are a specific color (for example, green or blue) along the width direction of the inspection region.

(Step S104) The signal control unit 23 compares the counted value, in which a section that is a specific color has been counted in the width direction, with a reference value, and performs a pass/fail determination based on the comparison result.

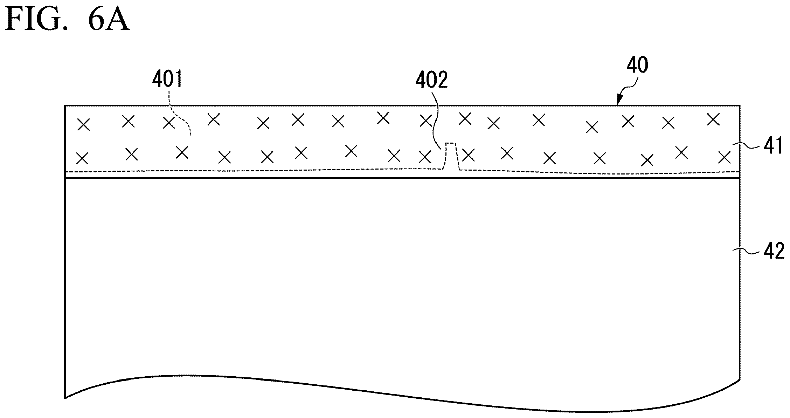

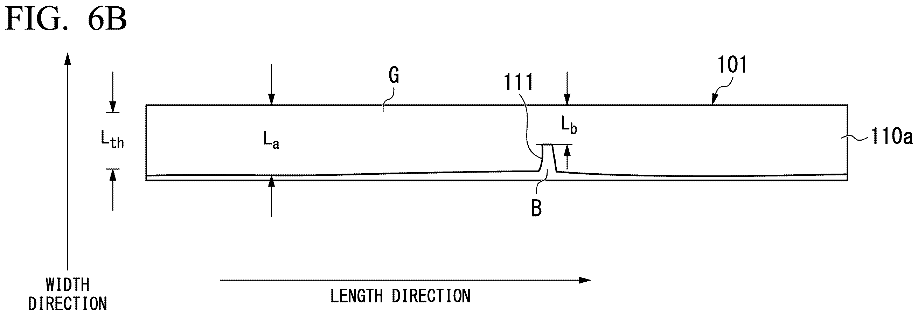

FIG. 6A and FIG. 6B are explanatory diagrams of a seal width check. As shown in FIG. 6A, suppose that a gap 402 has occurred in the joined location 401 when the peripheral edge portion 41 of the packaging container 40 is joined. The two-dimensional distribution data is generated with respect to the peripheral edge portion 41 of such a packaging container 40 using the detection signals from the reception unit 28, and an image 110a of the ultrasonic image display area 101 is generated. At this time, as shown in FIG. 5, an RGB image is generated by setting the corresponding location to red (R) when the signal strength is Va or higher, setting the corresponding location to green (G) when the signal strength is less than Va and Vb or higher, and setting the corresponding location to blue (B) when the signal strength is less than Vb. The intensity of the transmitted ultrasonic waves differs depending on whether or not a defect has occurred in the inspection region. Consequently, when the two-dimensional distribution data is generated using the detection signals from the reception unit 28 obtained from the packaging container 40 such as that as shown in FIG. 6A, the image 110a such as that shown in FIG. 6B is generated. That is to say, those sections of the joined location 401 of the peripheral edge portion 41 of the packaging container 40 at which the joining has been sufficiently performed become green (G) because the detection signal is greater than or equal to a predetermined value. A section of the image 111 that corresponds to the gap 402 becomes blue (B) because the detection signal becomes weaker.

The presence or absence of such a defect can be determined by whether or not the length in the width direction that is green is less than or equal to a reference value. In other words, as shown in FIG. 6B, when the length in the width direction of a section that is green (G) in the image of the inspection region (in which the signal strength is in a first range (Va to Vb)) is measured, the length La in the width direction of the section in which the gap 402 has not occurred is a reference value Lth (first reference value) or more (La ≧ Lth), and the length Lb in the width direction of the section in which the gap 402 has occurred in the image 111 is less than the reference value Lth (Lb < Lth). Therefore, by counting the section of a specific color (such as green) in the width direction and comparing the count value with the reference value Lth, a pass/fail determination can be performed. That is to say, in the present example, a fail determination can be made when the count value in the width direction of the green section becomes less than or equal to the reference value Lth.

In the description above, the point count belonging to the green (G) region is counted in the width direction, and the pass/fail determination is performed based on the count value. However, the present disclosure is not limited to such an example. For example, the point count belonging to the blue (B) region may be counted in the width direction, and the pass/fail determination may be performed based on the count value. In this case, the quality can be determined to be unsatisfactory when the count value in the width direction of the section that is blue (B) becomes greater than or equal to a reference value.

Furthermore, when the length in the width direction that has been measured using the number of points of a specific color is compared to the reference value, a case where the point count of the specific color in the same row are all counted, and a case where only a point count of consecutive points in the specific color in the same row is counted can be considered. As a result of counting only a point count of consecutive points in the specific color in the same row, it is possible to detect a defect that has occurred in the joined location 401.

In this way, by performing the seal width check, it is possible to detect a defect such as the occurrence of the gap 402 in the joined location 401. In addition, it is possible to detect a defect in the joined location 401 by performing the seal width check in a case where the width direction of the joined location 401 has become narrow overall, or a case where there is a significant defect location in the joined location 401.

Next, an area check will be described. In an area check, a determination target area is set in an image of the two-dimensional distribution data generated using the detection signals from the reception unit 28. Then, from the total count value of points in the determination target area that belong to a specific color, it is determined whether or not the quality of the joined state of the packaging container 40 is satisfactory. In the area check, processing such as that shown in the flowchart below is performed.

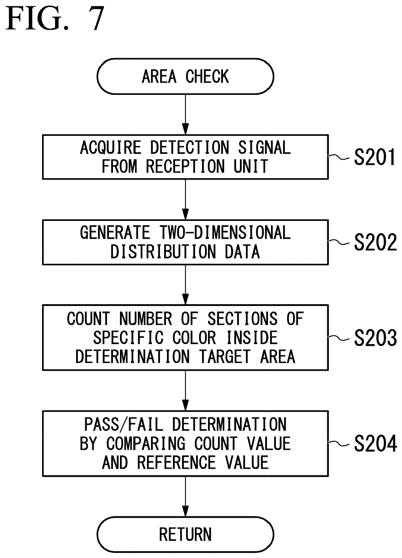

FIG. 7 is a flowchart showing the processing in an area check according to the present embodiment.

(Step S201) The signal control unit 23 causes the transmission unit 26 to transmit ultrasonic waves into the inspection region of the packaging container 40, and acquires detection signals from the reception unit 28. As mentioned above, the detection signals of the ultrasonic sensors that are one-dimensionally or two-dimensionally arranged are read out from the reception unit 28 by scanning line-by-line.

(Step S202) The signal control unit 23 sets a color according to the signal strength of the detection signal from each sensor of the reception unit 28, and generates two-dimensional distribution data. In the present example, as shown in FIG. 5, an image of the two-dimensional distribution data in RGB is generated by setting a point to red when the signal strength is Va or higher, setting a point to green when the signal strength is less than Va and Vb or higher, and setting a point to blue when the signal strength is less than Vb.

(Step S203) The signal control unit 23 sets the determination target area, and counts the number of points of a specific color in the determination target area.

(Step S204) The signal control unit 23 sets determination target area determines whether or not the quality is satisfactory by comparing the number of points having a specific color in the determination target area with a reference value.

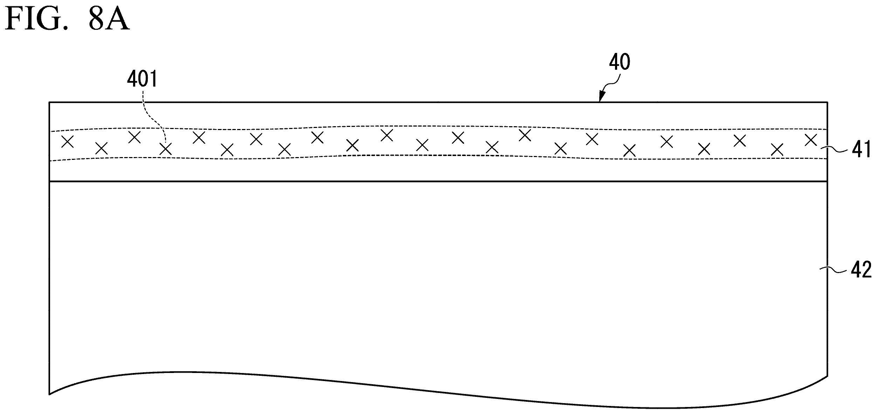

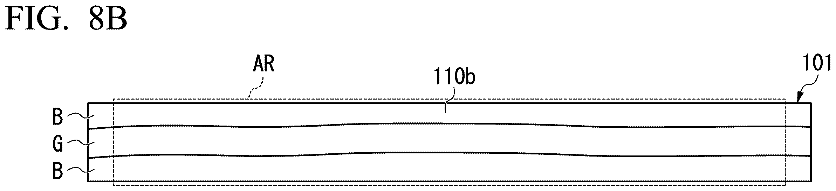

FIG. 8A and FIG. 8B are explanatory diagrams of an area check. As shown in FIG. 8A, in the joined section, the width of the joined location 401 in the width direction is approximately half or less than the width in the width direction, and a joined section having such a narrow width is spread over the entire length direction. As a result, the joining is insufficient overall in the peripheral edge portion 41. In the area check, a pass/fail determination is performed according to the area of a section in the determination target area having a specific color (such as green (G)).

Specifically, when the two-dimensional distribution data is generated from the packaging container 40 such as that shown in FIG. 8A, and an image 110b of the ultrasonic image display area 101 is displayed, the image 110b of the ultrasonic image display area 101 such as that shown in FIG. 8B is displayed. As shown in FIG. 8B, in the processing of the area check, processing is performed in which a determination target area AR is set, the point count of the green (G) region (the section where the signal strength is less than Va and Vb or more) in the determination target area AR is counted, and compares the number of pixels to a reference value (second reference value). Further, it is determined whether or not the quality is satisfactory based on the comparison result between the number of points in the green (G) region in the determination target area AR and the reference value. For example, it is determined that the product has satisfactory quality when the point count of the green (G) region in the determination target area AR is greater than or equal to the reference value, and it is determined that the product has unsatisfactory quality when the point count of the count value is less than the reference value.

The limit that can be accepted as a product having satisfactory quality in the area check, can be set by changing a set value of the reference value.

Furthermore, the determination target area AR may be an area that has been determined in advance. More specifically, the size of the region of the determination target area AR may be a size that has been determined in advance. The position in which the determination target area AR is set may be set to a position in the inspection region that has been determined in advance. Moreover, the size or position of the determination target area AR may be changed. In addition, the packaging container 40 is not necessarily always placed in the same position. When the position of the packaging container 40 shifts, the position of the determination target area AR with respect to the joined location 401 being inspected will move. Therefore, the position of the determination target area AR may be moved to follow the position of the packaging container 40.

In the present example, the point count belonging to the green (G) region in the determination target area AR is counted, and then the point count is compared to the reference value. However, it is also possible to count the points belonging to the blue (B) in the determination target area AR. In this case, the point count belonging to the blue (B) in the determination target area AR is compared to a reference value, and the quality is determined to be unsatisfactory when the point count is greater than or equal to the reference value.

Furthermore, the area check is capable of detecting various defects by setting the determination target area. This will be described below.

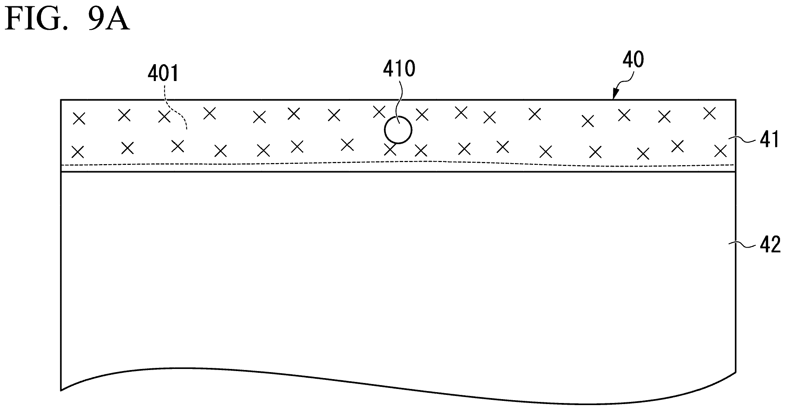

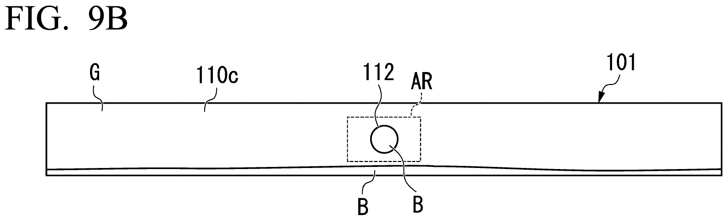

FIG. 9A and FIG. 9B are explanatory diagrams showing the setting of the determination target area. For example, as shown in FIG. 9A, when the peripheral edge portion 41 of the packaging container 40 is joined, it is possible that food ingredients such as juices may enter the joined location 401 of the peripheral edge portion 41, resulting in a defect location 410 caused by an air bubble. Such a defect can be detected by appropriately setting the determination target area AR, and then determining the area of the section in the determination target area AR that is a specific color.

That is to say, when the two-dimensional distribution data is generated from the packaging container 40, in which the defect location 410 has occurred, and an image 110c of the ultrasonic image display area 101 is displayed, then as shown in FIG. 9B, the joined location 401 of the peripheral edge portion 41 becomes almost completely green (G). On the other hand, as shown in FIG. 9B, an image section 112 corresponding to the defect location 410 becomes blue (B). Therefore, in the area check, processing is performed in which it is detected whether or not there is a region that is blue (B) inside a region that belongs to green (G), the region that is blue (B) inside the region that belongs to green (G) is set as the determination target area AR, and the number of points in the determination target area AR belonging to the blue (B) region is counted. Then, the number of points in the determination target area AR belonging to the blue (B) region is compared to a reference value, and a pass/fail determination is performed according to the comparison result. When the region belonging to blue (B) in the region belonging to green (G) is set as the determination target area, and the points in the determination target area AR belonging to the blue (B) region are counted, the count value corresponds to the area of the defect location 410. Therefore, if the number of points in the determination target area AR belonging to the blue (B) region is larger than a reference value, it is possible to determine that a defect location 410 having a large area has occurred, and that the product has unsatisfactory quality.

Next, a correlation check will be described. In a correlation check, the correlation between the two-dimensional distribution data of a packaging container having satisfactory quality, which serves as a sample, and the two-dimensional distribution data representing the inspection result is used to determine whether or not the quality of the joined state of the packaging container 40 is satisfactory. In the correlation check, processing such as that shown in the flowchart below is performed.

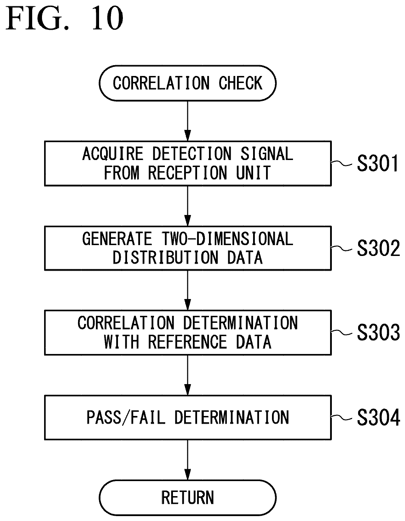

FIG. 10 is a flowchart showing the processing in a correlation check according to the present embodiment.

(Step S301) The signal control unit 23 causes the transmission unit 26 to transmit ultrasonic waves into the joined location 401 of the packaging container 40, and acquires detection signals from the reception unit 28. As mentioned above, the detection signals of the ultrasonic sensors that are one-dimensionally or two-dimensionally arranged are read out from the reception unit 28 by scanning line-by-line.

(Step S302) The signal control unit 23 sets a color according to the signal strength of the detection signal from each sensor of the reception unit 28, and generates two-dimensional distribution data. In the present example, as shown in FIG. 5, two-dimensional distribution data is generated by setting the corresponding location to red (R) when the signal strength is Va or higher, setting the corresponding location to green (G) when the signal strength is less than Va and Vb or higher, and setting the corresponding location to blue (B) when the signal strength is less than Vb.

(Step S303) The signal control unit 23 reads out a reference data image, and determines a correlation between an image of the two-dimensional distribution data that has been generated using the detection signals from the reception unit 28, and the reference data image.

(Step S304) The signal control unit 23 determines whether or not the quality of the joined location 401 is satisfactory based on a correlation value between the image of the two-dimensional distribution data that has been generated using the detection signals from the reception unit 28 and the reference data image.

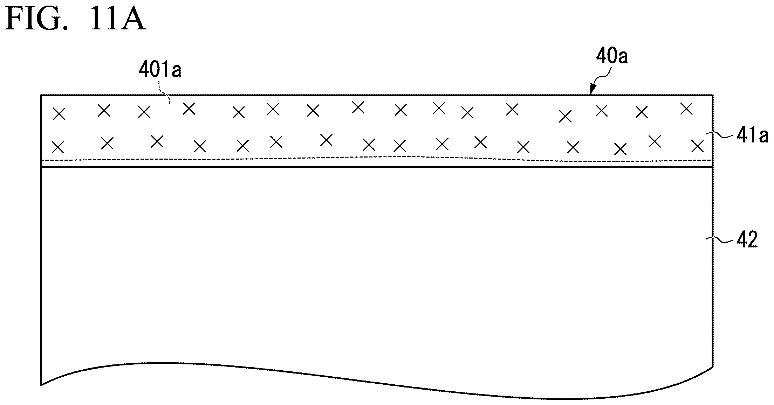

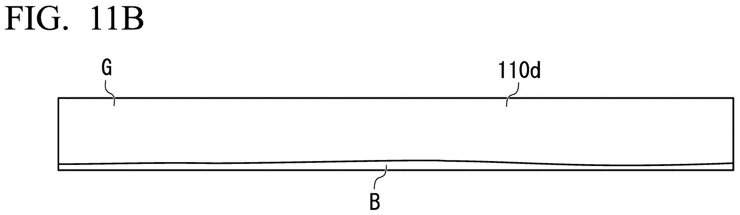

FIG. 11A and FIG. 11B are explanatory diagrams of a correlation check. In the ultrasonic inspection system 1 according to the present embodiment, a pass/fail inspection is performed for each of a variety of products. In the correlation check, as shown in FIG. 11A, a packaging container 40a having a satisfactory quality is prepared in advance as a sample for each product. Then, using the joined portion 401a of the peripheral edge portion 41a of the packaging container 40a having a satisfactory quality serving as a sample, as shown in FIG. 11B, an image 110d of the two-dimensional distribution data of a reference pattern in the case of satisfactory quality is generated and saved in advance.

In the correlation check, the signal control unit 23 reads out the image 110d of the two-dimensional distribution data of the reference pattern, and calculates the correlation between the image of the two-dimensional distribution data that has been generated using the detection signals from the reception unit 28, and the image 110d of the two-dimensional distribution data of the reference pattern. Then, the signal control unit 23 determines that the quality is satisfactory if the correlation value is large.

In the determination of the correlation check, for example, while relatively shifting the image of the two-dimensional distribution data that has been regenerated using the detection signals from the reception unit 28 in the up-down direction and the left-right direction with respect to the image 110d of the two-dimensional distribution data of the reference pattern, the image 110d of the two-dimensional distribution data of the reference pattern is multiplied at each pixel in a corresponding position in the image of the two-dimensional distribution data that has been generated using the detection signals from the reception unit 28, and thereby the determination can be made by integrating the multiplied values. That is to say, when the images of both two-dimensional distribution data are multiplied at each pixel in corresponding positions while relatively shifting the image 110d of the two-dimensional distribution data of the reference pattern with respect to the image of the two-dimensional distribution data that has been regenerated using the detection signals from the reception unit 28 in the up-down direction and the left-right direction, and the multiplied values are then integrated, a large integral value is obtained at positions where the patterns of both two-dimensional distribution data approximately match each other. In contrast, when the correlation is low, even when the images of both two-dimensional distribution data are multiplied at each pixel in corresponding positions while relatively shifting the image of the two-dimensional distribution data of the reference pattern with respect to the image of the two-dimensional distribution data that has been regenerated using the detection signals from the reception unit 28 in the up-down direction and the left-right direction, and the multiplied values are then integrated, a large integral value is not obtained because the patterns of both two-dimensional distribution data barely match each other.

In the example above, the correlation between the image of the two-dimensional distribution data that has been generated using the detection signals from the reception unit 28, and the image of the reference pattern is calculated. However, the present disclosure is not limited to such an example. For example, a correlation between a histogram of an image of the generated two-dimensional distribution data, and a histogram of an image of a reference pattern may also be calculated. When the correlation between the histograms is calculated, various defects can be further detected.

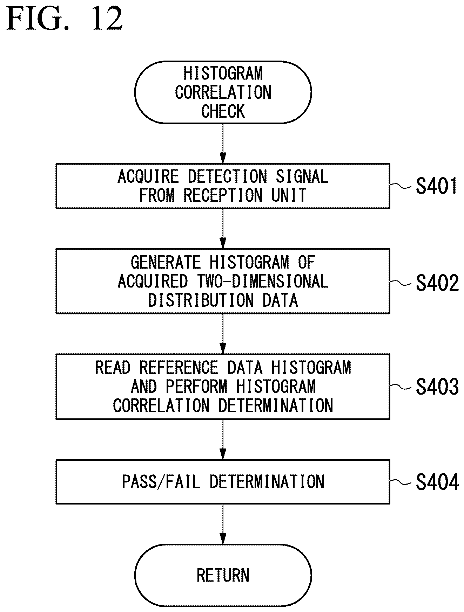

FIG. 12 is a flowchart showing the processing in a case where a correlation between histograms is calculated in a correlation check according to the present embodiment.

(Step S401) The signal control unit 23 causes the transmission unit 26 to transmit ultrasonic waves into the inspection region of the packaging container 40, and acquires detection signals from the reception unit 28. As mentioned above, the detection signals of the ultrasonic sensors that are one-dimensionally or two-dimensionally arranged are read out from the reception unit 28 by scanning line-by-line.

(Step S402) The signal control unit 23 generates a histogram corresponding to the signal strengths from an image of the two-dimensional distribution data obtained using the detection signal from each sensor of the reception unit 28.

(Step S403) The signal control unit 23 reads out the histogram of a reference data image that has been prepared in advance, and calculates a correlation between the histogram of an image of the generated two-dimensional distribution data, and the histogram of the reference data image.

(Step S404) The signal control unit 23 determines whether or not the quality of the joined location 401 is satisfactory based on a correlation value between the histogram of the image of the two-dimensional distribution data that has been generated using the detection signals from the reception unit 28 and the histogram of the reference data image.

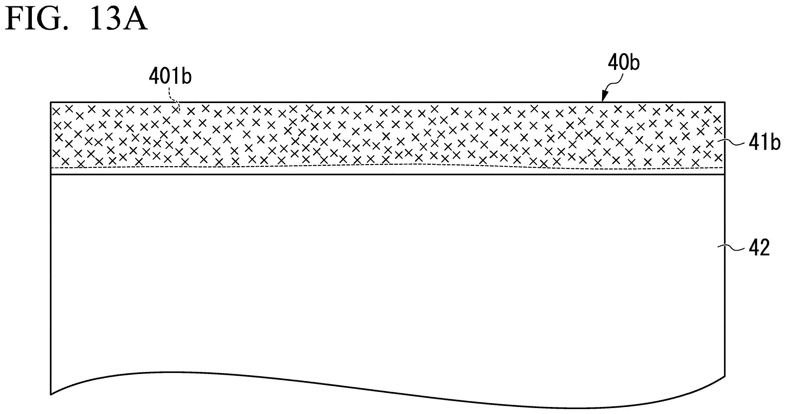

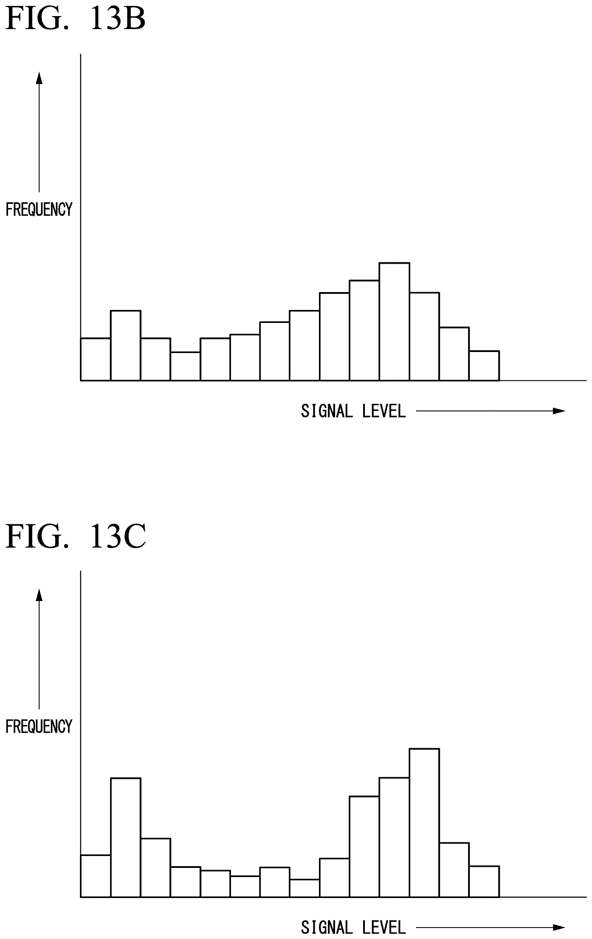

FIG. 13A, FIG. 13B, and FIG. 13C are explanatory diagrams of a pass/fail determination performed using a correlation between histograms. As shown in FIG. 13A, when the peripheral edge portion 41b of the packaging container 40b is joined, it is possible that the extent of welding of the section at the joined location 401b is excessive, and exceeds the extent of welding that can be determined as having a satisfactory quality. Such a defect can be detected by using the correlation with the histogram of the reference pattern.

That is to say, when a certain material is used for the packaging container 40b, the fiber component of the material normally remains after welding the section of the joined location. On the other hand, if there is excessive welding at the joined location, it is possible that the fibers of the material have melted out. The ultrasonic transmittance differs depending on whether the fiber components of the material are remaining or the fibers of the material have melted out. For this reason, the histogram of the image of the two-dimensional distribution data obtained using the detection signals from the reception unit 28 differs between a normal joined location and a joined location with excessive welding. For example, in the joined portion 401a of the packaging container 40a shown in FIG. 11A, which is a sample, the histogram of the image of the two-dimensional distribution data of the signals from the reception unit 28 is as shown in FIG. 13B. In contrast, in the joined location 401b of the peripheral edge portion 41b of the packaging container 40b with excessive welding shown in FIG. 13A, the histogram of the image of the two-dimensional distribution data of the signal from the reception unit 28 is as shown in FIG. 13C. In FIG. 13B and FIG. 13C, the horizontal axis represents the signal level, and the vertical axis represents the frequency.

In this example, as mentioned above, a packaging container 40a having satisfactory quality (a reference target serving as a reference) is prepared in advance as a sample. Then, using the packaging container 40a having a satisfactory quality and serving as a sample, a histogram of the two-dimensional distribution data of the reference pattern such as that shown in FIG. 13B is generated and saved in advance.

In a pass/fail determination performed using the correlation with a histogram of the reference data, processing is performed in which the correlation is calculated between the histogram of the image of the two-dimensional distribution data that has been generated using the detection signals from the reception unit 28, the histogram of the image of the reference pattern of the packaging container 40a serving as a sample, such as that shown in FIG. 13B, and a determination is made that the quality is satisfactory when the correlation value is large.

As described above, the correlation check can detect various types of defects and determine whether or not the quality of the joined portion is satisfactory. Furthermore, by detecting the correlation with the histogram of the reference data, it is possible to detect defects such as excessive welding at the section of the joined location. In addition, by using machine learning, various defects can be detected from the two-dimensional distribution data that has been generated using the detection signal from the reception unit 28.

That is to say, a model that determines whether or not the quality of a joined location is satisfactory is created from the two-dimensional distribution data that has been generated using the detection signals from the reception unit 28, and training of the model (for example, by machine learning) is performed using a reference pattern obtained when the quality is satisfactory as teaching data. Then, the signal control unit 23 can obtain a determination result in which it is determined whether or not the quality of the joined location is satisfactory by inputting the two-dimensional distribution data that has been generated using the detection signals from the reception unit 28 into the trained model.

Furthermore, when obtaining a trained model, a trained model may be generated by collecting a plurality of two-dimensional distribution data of inspection results in which the quality has been determined to be satisfactory, and performing training with the two-dimensional distribution data serving as teaching data. Then, using the trained model that has been trained using the two-dimensional distribution data (reference two-dimensional distribution data) in which the quality has been determined to be satisfactory, it is possible to obtain a determination result in which it is determined whether or not the quality of the joined location in the two-dimensional distribution data that has been generated using the detection signals from the reception unit 28 is satisfactory.

When performing a pass/fail determination using such a trained model, the determination may be made based on the correlation between the two-dimensional distribution data that has been generated using the detection signals from the reception unit 28, and the two-dimensional distribution data based on the trained model, or a relationship between the histograms of the two-dimensional distribution data that has been generated using the detection signal from the reception unit 28, and the two-dimensional distribution data based on the trained model.

As mentioned above, in the ultrasonic inspection system 1 according to the present embodiment, a seal width check, an area check, and a correlation check are performed. The control unit 22 is capable of performing an overall pass/fail determination based on at least one of the determination results and notifying the user through the display device 10.

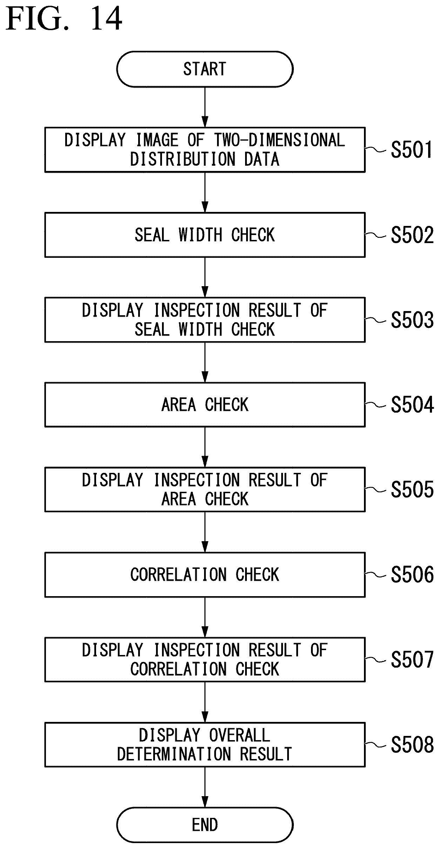

FIG. 14 is a flowchart showing the pass/fail determination processing performed in an ultrasonic inspection system according to an embodiment.

(Step S501) The control unit 22 displays an image that has been generated from the two-dimensional distribution data generated using the detection signals from the reception unit 28, on the display device 10.

(Step S502) The signal control unit 23 uses the two-dimensional distribution data that has been generated using the detection signals from the reception unit 28 to perform a seal width check, and transmits the result to the control unit 22.

(Step S503) The control unit 22 displays the inspection result of the seal width check on the display device 10.

(Step S504) The signal control unit 23 uses the two-dimensional distribution data that has been generated using the detection signal from the reception unit 28 to perform an area check, and transmits the result to the control unit 22.

(Step S505) The control unit 22 displays the inspection result of the area check on the display device 10.

(Step S506) The signal control unit 23 uses the two-dimensional distribution data that has been generated using the detection signals of the reception unit 28 to perform a correlation check, and transmits the result to the control unit 22.

(Step S507) The control unit 22 displays the inspection result of the correlation check on the display device 10.

(Step S508) The signal control unit 23 performs an overall pass/fail determination based on at least one determination result among the result of the seal width check, the result of the area check, and the result of the correlation check, and the control unit 22 displays the overall determination result on the display device 10.

As described above, in the ultrasonic inspection system 1 according to the present embodiment, a seal width check, an area check, and a correlation check are performed, and an overall pass/fail determination is made from the check results. Then, as shown in FIG. 2, the display screen on the display device 10 displays an image of the two-dimensional distribution data being inspected (in the ultrasonic image display area 101), as well as the inspection items, namely the seal width check, the area check, and the correlation check, and the determination results (the determination results 103a to 103c and the overall determination result 103d). In the present embodiment, because the overall pass/fail determination is performed using a combination of the seal width check result, the area check result, and the correlation check result, the pass/fail determination can be performed with high reliability. Furthermore, because the seal width check determination result 103a, the area check determination result 103b, and the correlation check determination result 103c are displayed, it is possible for the user to grasp the factors used in performing the pass/fail determination, which makes it easier to deal with the pass/fail determination.

The overall determination may be made by using at least one determination result from among the three determination results, namely the seal width check result, the area check result, and the correlation check result. Furthermore, a weighting coefficient may be assigned to each of the three determination results, and an overall pass/fail determination may be performed by calculating an evaluation value by weighted addition of the three determination results.

Furthermore, in the example described above, the packaging container 40 is a packaging container such as a retort pouch, but the inspection target may also be a battery pack.

When the inspection target is a lithium ion battery, the strength of the burst waves irradiated from the ultrasonic generation unit and transmitted through the inspection target differs according to the presence or absence of a difference in acoustic impedance of the inspection target (lithium ion battery) in the irradiation direction. In the case of a lithium ion battery, when air bubbles are generated in the electrolyte inside the battery, because the difference in acoustic impedance between the electrolyte and the air bubbles is large (the intensity is high), the burst waves are reflected at the interface between the electrolyte and the air bubbles. That is to say, because the difference in the acoustic impedance between the electrolyte and the air bubbles is large, the interface between the electrolyte of the lithium ion battery and the air bubbles expands as a result of the cross-sectional area of the air bubbles becoming larger with respect to the irradiation area of the burst waves. As a result, the proportion of burst waves that are blocked by the reflections at the interface between the electrolyte and the air bubbles increases, and the proportion of burst waves that are transmitted decreases.

In the present embodiment, the strength of the acoustic impedance is defined as the proportion of the interfaces between layers having significantly different acoustic impedances (for example, the respective electrolyte and air bubble layers) that are overlapped with respect to the irradiation area of the burst waves at a measurement point. Here, the transmittance of the ultrasonic waves with respect to the inspection target corresponds to the strength of the acoustic impedance. When the strength of the acoustic impedance is large, the transmittance decreases. When the strength of the acoustic impedance is low, the transmittance increases. The lower the transmittance, the lower the reception strength. The higher the transmittance, the higher the reception strength.

Although several embodiments of the disclosure have been described, the embodiments are presented as examples and are not intended to limit the scope of the disclosure. The embodiments can be implemented in various other forms, and various omissions, substitutions, and changes can be made without departing from the gist of the disclosure. The embodiments and the modifications thereof are included within the scope and gist of the disclosure, as well as within the scope of the disclosure described in the claims and equivalents thereof.

### Industrial Applicability

The present disclosure may be applied to an inspection method and an inspecting device.

### Description of Reference Signs

- 1: Ultrasonic inspection system
- 20: Ultrasonic inspecting device
- 26: Transmission unit
- 28: Reception unit
- 40: Packaging container
- 41: Peripheral edge portion

## Claims

1. An inspection method comprising:
acquiring a plurality of signal strengths that correspond respectively to a plurality of positions, the plurality of positions being included in an inspection region of an inspection target and being arranged along a first and second direction, each of the plurality of signal strengths indicating a signal strength corresponding to reception of ultrasonic waves emitted into the inspection region;
generating two-dimensional distribution data representing a relationship between the plurality of positions and the plurality of signal strengths;
counting, by using the two-dimensional distribution data, a number of positions, among the plurality of positions, that are arranged along the second direction and that are associated with the signal strength indicating a strength included in a first range; and
determining a quality of the inspection target based on a comparison result between a result of the count and a first reference value.

2. An inspection method comprising:
acquiring a plurality of signal strengths that correspond respectively to a plurality of positions, the plurality of positions being included in an inspection region of an inspection target and being arranged along a first and second direction, each of the plurality of signal strengths indicating a signal strength corresponding to reception of ultrasonic waves emitted into the inspection region;
generating two-dimensional distribution data representing a relationship between the plurality of positions and the plurality of signal strengths;
counting, by using the two-dimensional distribution data, a number of positions, among the plurality of positions, that are included in a determination target area and that are associated with the signal strength indicating a strength included in a first range; and
determining a quality of the inspection target based on a comparison result between a result of the count and a second reference value.

3. The inspection method according to claim 2, wherein the determination target area is an area that has been determined in advance.

4. An inspection method comprising:
acquiring a plurality of signal strengths that correspond respectively to a plurality of positions, the plurality of positions being included in an inspection region of an inspection target and being arranged along a first and second direction, each of the plurality of signal strengths indicating a signal strength corresponding to reception of ultrasonic waves emitted into the inspection region;
generating two-dimensional distribution data representing a relationship between the plurality of positions and the plurality of signal strengths; and
determining a quality of the inspection target based on the two-dimensional distribution data and a trained model, the trained model being generated by learning reference two-dimensional distribution data generated using a reference target that serves as a reference.

5. The inspection method according to claim 4, wherein the quality of the inspection target is determined based on a correlation between the two-dimensional distribution data and the reference two-dimensional distribution data.

6. The inspection method according to claim 4, wherein the quality of the inspection target is determined from a relationship between a histogram of the two-dimensional distribution data and a histogram of the reference two-dimensional distribution data.

7. The inspection method according to claim 4, wherein the trained model is a trained model obtained by performing machine learning with the reference two-dimensional distribution data serving as teaching data.

8. An inspection method comprising
displaying, on a display device, an inspection item based on the inspection method according to at least one of claims 1 to 7, a result of the inspection item, and the two-dimensional distribution data.

9. The inspection method according to any one of claims 1 to 8,
wherein the first direction is a length direction of the inspection region, and
wherein the second direction is a width direction of the inspection region that is orthogonal to the length direction of the inspection region.

10. An inspecting device configured to execute an inspection method according to any one of claims 1 to 9.
